# EUROPEAN PATENT APPLICATION

(11) **EP 3 540 372 A1**
(43) Date of publication of application: **18.09.2019**
(21) Application number: 19169720.0
(22) Date of filing: 11.04.2016
(51) Int. Cl.: G01B 11/25, G01N 21/956, G01B 11/06

(54) **THREE-DIMENSIONAL SHAPE MEASUREMENT APPARATUS**

(30) Priority: 10.04.2015 KR 20150051069
(62) Divisional of application: 16776943.9
(71) Applicant: Koh Young Technology Inc., Geumcheon-gu, Seoul 08588 (KR)
(72) Inventor: JEON, Moon Young, Seongnam-si, Gyeonggi-do (KR); KIM, Hongmin, 03710 Seoul (KR)
(74) Representative: Zardi, Marco

(57) **Abstract**

A three-dimensional shape measurement apparatus includes a plurality of main pattern illumination parts, a plurality of main image-capturing parts and a control part. The main pattern illumination parts obliquely emit grating pattern lights toward a measurement target in different directions. The main image-capturing parts image-capture grating pattern lights that are emitted from the main pattern illumination parts and obliquely reflected by the measurement target. The control part produces a three-dimensional shape of the measurement target using grating pattern images captured from the main image-capturing parts. Thus, accuracy and precision of measurement may be improved.

## Description

### [Technical Field]

The present invention relates to a three-dimensional shape measurement apparatus. More particularly, the present invention relates to a three-dimensional shape measurement apparatus capable of improving measurement precision.

### [Background Art]

Generally, at least one printed circuit board (PCB) is employed in an electronic device, and various elements are mounted on the PCB, such as a circuit pattern, a connection pad part, a driver chip electrically connected to the connection pad part, etc.

Since solder is applied to a pad of the PCB and a component is mounted on the solder, it is necessary to check whether the solder is properly applied to the pad before the component is mounted. In addition, it is important to measure a three-dimensional shape of the solder for various inspections on preset defects such as solder-formed location and solder-missing, insufficient solder, bridge, etc.

These components are mounted on the pads of the PCB through soldering, and thereafter it is necessary to check whether the components are properly soldered to the PCB. In addition, it is important to measure three-dimensional shapes of the components for various inspections on mounted part defects such as component-formed location, placement state, lifting, etc.

In order to measure the three-dimensional shapes of such solder and parts, recently, a shape measurement method of measuring a grating pattern light on a measurement target and applying a bucket algorithm using reflected grating pattern images is utilized. However, in the conventional shape measurement method, since the grating pattern light is obliquely provided to the measurement target and then the grating pattern image is captured by a camera disposed over the measurement target, it is difficult to obtain accurate and precise results according to reflectance or surface state of the measurement target.

### [Disclosure]

### [Technical Problem]

Accordingly, the present invention provides a three-dimensional shape measurement apparatus capable of improving accuracy and precision on a three-dimensional shape of a measurement target by using a plurality of pattern illumination parts and a plurality of image-capturing parts.

### [Technical Solution]

According to an exemplary embodiment of the present invention, a three-dimensional shape measurement apparatus includes a plurality of main pattern illumination parts, a plurality of main image-capturing parts and a control part. The main pattern illumination parts obliquely emit grating pattern lights toward a measurement target in different directions. The main image-capturing parts image-capture grating pattern lights that are emitted from the main pattern illumination parts and obliquely reflected by the measurement target. The control part produces a three-dimensional shape of the measurement target using grating pattern images captured from the main image-capturing parts.

In an exemplary embodiment, the three-dimensional shape measurement apparatus may further include a top pattern illumination part disposed over the measurement target to vertically emit the grating pattern light towards the measurement target. In addition, the three-dimensional shape measurement apparatus may further include a top image-capturing part disposed over the measurement target to capture a grating pattern image, wherein the grating pattern light is emitted from at least one of the main pattern illumination parts and the top pattern illumination part and vertically reflected by the measurement target to form the grating pattern image. Herein, the three-dimensional shape measurement apparatus may further include a top beam-splitting part transmitting the grating pattern light generated from the top pattern illumination part toward the measurement target and reflecting at least one of reflection lights, which are emitted from the a plurality of main pattern illumination parts and the top pattern illumination part and reflected by the measurement target, to the top image-capturing part.

For example, the main pattern illumination parts may be spaced apart from each other around the measurement target in a circumferential direction. In addition, the main image-capturing parts may be spaced apart from each other around the measurement target in a circumferential direction.

In an exemplary embodiment, the main pattern illumination parts may be spaced apart from each other around the measurement target in a circumferential direction, the main image-capturing parts may be spaced apart from each other around the measurement target in a circumferential direction, and the main pattern illumination parts and the main image-capturing parts may be disposed alternately with each other.

In another exemplary embodiment, the main pattern illumination parts may be spaced apart from each other around the measurement target in a circumferential direction, the main image-capturing parts may be spaced apart from each other around the measurement target in a circumferential direction, and the main pattern illumination parts and the main image-capturing parts may be disposed corresponding to each other with forming a set. Herein, the three-dimensional shape measurement apparatus may further include a main beam-splitting part forming a set with the main pattern illumination part and the main image-capturing part that are disposed corresponding to each other, transmitting the grating pattern light generated from the main pattern illumination part toward the measurement target, and separating reflection lights, which are emitted from the main pattern illumination parts and reflected by the measurement target, to provide the reflection lights to the main image-capturing part.

### [Advantageous Effects]

According to the present invention, grating pattern lights are generated from multiple pattern illumination parts and grating pattern images are captured by multiple image-capturing parts. Thus, when merging multiple grating pattern images captured by the multiple image-capturing parts, more accurate and precise measurement for the three-dimensional shape of the measurement target may be available.

Further, when the main pattern illumination parts, the main image-capturing parts, and the main beam-splitting parts are formed to correspond to each other, more compact device arrangement and more effective three-dimensional shape measurement for the measurement target may be available.

In addition, when a top pattern illumination part is provided, since a grating pattern light is provided perpendicular to the measurement target, a more precise three-dimensional shape measurement for the measurement target may be available.

In addition, when a top image-capturing part is provided, more precise three-dimensional shape measurement for the measurement target may be available by receiving vertically reflected grating pattern lights and a two-dimensional illumination images.

Also, when the main pattern illumination parts, the main image-capturing parts and the main beam-splitting part form a set, and the top pattern illumination part, the top image-capturing part and the top beam-splitting part form a set, since the pattern illumination parts and the image-capturing parts are included as many as possible, more precise three-dimensional shape measurement for the measurement target may be available.

### [Description of Drawings]

FIG. 1 is a front view schematically showing a three-dimensional shape measurement apparatus according to an exemplary embodiment of the present invention.
FIG. 2 is a plan view of the three-dimensional shape measurement apparatus shown in FIG. 1.
FIG. 3 is a plan view of a three-dimensional shape measurement apparatus according to another exemplary embodiment of the present invention.
FIG. 4 is a conceptual view illustrating the main pattern illumination part and main image-capturing part of FIG. 3.
FIG. 5 is a plan view of a three-dimensional shape measurement apparatus according to still another exemplary embodiment of the present invention.
FIG. 6 is a plan view of a three-dimensional shape measurement apparatus according to still another exemplary embodiment of the present invention.
FIG. 7 is a plan view of a three-dimensional shape measurement apparatus according to still another exemplary embodiment of the present invention.

### [Mode for Invention]

The present invention is described more fully hereinafter with reference to the accompanying drawings, in which example embodiments of the present invention are shown. The present invention may, however, be embodied in many different forms and should not be construed as limited to the example embodiments set forth herein. Rather, these example embodiments are provided so that this disclosure will be thorough and complete, and will fully convey the scope of the present invention to those skilled in the art. In the drawings, the sizes and relative sizes of layers and regions may be exaggerated for clarity.

It will be understood that, although the terms first, second, third etc. may be used herein to describe various elements, components, regions, layers and/or sections, these elements, components, and/or sections should not be limited by these terms. These terms are only used to distinguish one element, component, region, layer or section from another region, layer or section. Thus, a first element, component, or section discussed below could be termed a second element, component, or section without departing from the teachings of the present invention.

The terminology used herein is for the purpose of describing particular example embodiments only and is not intended to be limiting of the present invention. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs.

It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, with reference to the drawings, preferred embodiments of the present invention will be described in detail.

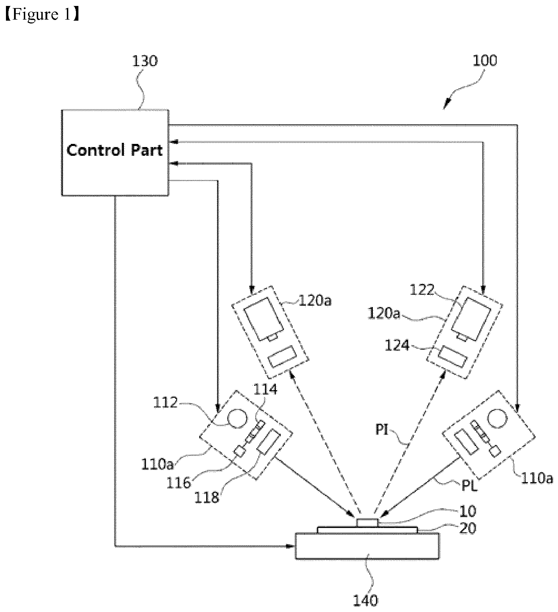

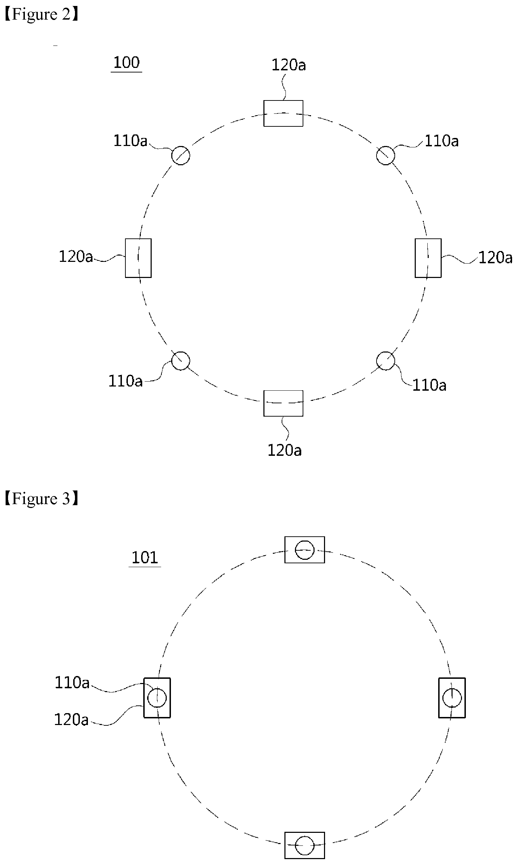

FIG. 1 is a front view schematically showing a three-dimensional shape measurement apparatus according to an exemplary embodiment of the present invention. FIG. 2 is a plan view of the three-dimensional shape measurement apparatus shown in FIG. 1.

Referring to FIGS. 1 and 2, a three-dimensional shape measuring apparatus 100 according to an exemplary embodiment of the present invention may include a plurality of main pattern illumination parts 110a, a plurality of main image-capturing parts, a control part 130, etc.

The main pattern illumination parts 110a obliquely emit grating pattern lights PL toward a measurement target 10 in different directions. That is, the main pattern illumination parts 110a may emit the grating pattern lights PL for obtaining the three-dimensional shape information of the measurement target 10, with a direction inclined based on a normal perpendicular to a plane of the measurement target 10.

The measurement target 10 may include solder or a component formed on a board 20 such as a printed circuit board (PCB). The board 20 may be disposed and supported on a stage 140. The stage 140 may transfer the measurement target 10 to a measurement location by means of a transfer device (not shown).

In one embodiment, the main pattern illumination parts 110 may emit the grating pattern lights PL by n times toward the measurement target 10, and may use a grating transfer mechanism or a pattern display of a liquid crystal display device, so as to emit phase-shifted grating pattern lights, to thereby shift grating pattern lights by n times. The grid pattern can be transferred n times using the pattern image. The main image-capturing part 120a, described later, may obtain grating pattern images PI corresponding to the emitted grating pattern lights PL.

In one embodiment, each of the main pattern illumination parts 110 may include a light source 112, a grating 114, a grating transfer instrument 116, and a projection lens portion 118.

The light source 112 provides light toward the measurement target 10. The grating 114 converts the light emitted from the light source 112 into the grating pattern light PL. The grating 114 is moved n times by 2π/n through the grating transfer instrument 116, for example, such as a piezo actuator (PZT), so as to generate a phase-shifted grating pattern light PL (n is a natural number not less than 2). The projection lens portion 118 projects the grating pattern light PL generated by the grating 114 onto the measurement target 10. The projection lens portion 118 may include, for example, a plurality of lens combinations, and focuses the grating pattern light PL formed through the grating 114 onto the measurement target 10. Thus, each main pattern illumination part 110 provides the grating pattern light PL to the measurement target 10 at each transfer, while transferring the grating 114 n times.

In one embodiment, the three-dimensional shape measurement apparatus 100 may include four main pattern illumination parts 110a, as shown in FIG. 2. The four main pattern illumination parts 110a may be spaced apart from each other around the measurement target 10 in the circumferential direction or arranged at respective vertexes of a polygon around the measurement target 10, when the measurement target 10 is viewed in a plan view. Thus, the main pattern illumination parts 110a may be provided in various numbers such as two, four, eight, etc.

The main image-capturing parts 120a capture the grating pattern image PI by receiving the grating pattern light PL, which is emitted from each main pattern illumination part 110a and obliquely reflected by the measurement target 10.

In one embodiment, each of the main image-capturing parts 120a may include a camera 122 and an imaging lens unit 124. For example, the camera 122 may employ a CCD or a CMOS camera. The grating pattern image PI that is reflected from the measurement target 10 and generated may be imaged by the imaging lens unit 124 and captured by the camera 122.

In one embodiment, the three-dimensional shape measurement apparatus 100 may include four main image-capturing parts 120a, as shown in FIG. 2. The four main image-capturing parts 120a may be spaced apart from each other around the measurement target 10 in the circumferential direction or arranged at respective vertexes of a polygon around the measurement target 10, when the measurement target 10 is viewed in a plan view. Thus, the main image-capturing parts 120a may be provided in various numbers such as two, four, eight, etc.

The main pattern illumination parts 110a and the main image-capturing parts 120a may be disposed alternately with each other, as shown in FIG. 2. In one embodiment, the four main pattern illumination parts 110a and the four main image-capturing parts 120a may be alternately and equally spaced apart from each other at eight positions around the circumference, when the measurement target 10 is viewed in a plan view.

When the main pattern illumination parts 110a and the main image-capturing parts 120a are alternately disposed as described above, the grating pattern images that are formed by the grating pattern lights PL generated from the main pattern illumination parts 110a may be captured by all of the main image-capturing parts 120a.

Meanwhile, the main pattern illumination parts 110a and the main image-capturing parts 120a may optionally employ optical path changing elements such as a mirror, so that substantial placement positions may be configured as the above, even though actual placement positions are somewhat different from the above.

The control part 130 calculates a three-dimensional shape of the measurement target 10 using the grating pattern images PI captured by the main image-capturing parts 120a.

For example, the control part 130 may apply bucket algorithm, which is well known, to the grating pattern images PI captured by the main image-capturing parts 120a, to thereby obtain three-dimensional shape information of the measurement target 10.

In one embodiment, the control part 130 may select and combine images or image pixels with high reliability among the grating pattern imaged PI captured by each main image-capturing part 120a, to thereby obtain three-dimensional shape information of the measurement target 10.

The reliability may include at least one of brightness, visibility, signal-to-noise ratio (SNR), measurement scope (λ) that corresponds to a grating pitch in each grating pattern light, and position information between each image-capturing part and each pattern illumination part. In addition, high and low reliability may be determined by utilizing an average brightness obtained by averaging the captured grating pattern lights as a preset reference value, and whether a value is greater or smaller may be determined based on the preset reference value for each image or each image pixel.

Meanwhile, in the captured grating pattern image PI, a shadow region and a saturation region may occur depending on the position of the measurement object 10. The shadow region corresponds to a region in which the average brightness is less than a minimum brightness value and the visibility or the SNR is less than a minimum reference value. The saturation region corresponds to a region in which the average brightness is above a maximum brightness value and the visibility or the SNR is below a minimum reference value. The non-saturation region corresponds to a remaining region except the shadow region and the saturation region.

As for the position information between each image-capturing part and each pattern illumination part, referring to FIG. 2, the shadow region and the saturation region may be formed different between the grating pattern images PI provided to the measurement target 10 from two pattern illumination parts adjacent to the image-capturing part at one side and two pattern illumination parts not adjacent to the image-capturing part at the one side. Thus, the reliability of the image or the image pixel of the shadow region or the saturation region may be set as low. In addition, in order to use multiple wavelengths, at least one of the pattern illumination parts may have a different grating pitch, or any one pattern illumination part may have two or more different grating pitches, and the accuracy of the three-dimensional shape varies according to the height of the measurement target 10. Thus, the reliability may be set based on the grating pitch of the grating pattern light and the height information of the measurement target 10.

The control part 130 may be a device capable of performing image processing, shape information processing, calculation, etc., and may be, for example, a computer. The control part 130 may control the operation of the above-described components, i.e., the main pattern illumination parts 110a, the main image-capturing parts 120a, etc.

In one embodiment, the control part 130 may control the main image-capturing parts 120a to simultaneously capture the grating pattern lights PL while controlling one main pattern illumination part 110a and projecting the grating pattern light PL onto the measurement target 10. Otherwise, the control part 130 may control the main image-capturing parts 120a so that the grating pattern light PL projected onto the measurement target 10 is captured only in the main image-capturing part 120a that is not adjacent to the one main pattern illumination part 110a.

Since each main image-capturing part 120a captures the grating pattern image PI while the main target image-capturing part 120a is inclined at a predetermined angle from a vertical direction to the measurement target 10, some distortion may occur in comparison with the measurement target 10 that is upwardly image-captured in the vertical direction to the measurement target 10. For this imaging distortion, the control part 130 may perform correction of the imaging distortion through comparison with a two-dimensional or three-dimensional image (for example, the measurement target 10, a specimen, etc.) captured at an upper portion based on a normal perpendicular to a predetermined plane of the measurement target 10.

The three-dimensional shape measurement apparatus 100 may further include an illumination part (not shown) for acquiring a two-dimensional image of the measurement target 10. The illumination part may provide at least two lights having different colors on the measurement target 10, and provide the lights at different inclination angles based on a normal perpendicular to the plane of the measurement target 10. For example, the illumination part may provide three different colored lights at different inclination angles, and LED illuminations may be continuously arranged so as to respectively have a ring shape, to generate monochromatic illumination.

Since the three-dimensional shape measurement apparatus 100 includes a plurality of main pattern illumination parts 110a and a plurality of main image-capturing parts 120a, accurate three-dimensional shape measurement in various directions and angles may be available.

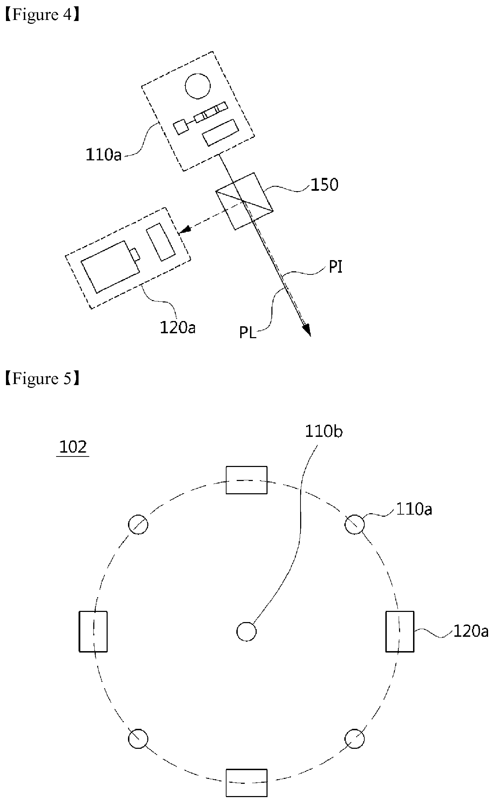

FIG. 3 is a plan view of a three-dimensional shape measurement apparatus according to another exemplary embodiment of the present invention. FIG. 4 is a conceptual view illustrating the main pattern illumination part and main image-capturing part of FIG. 3.

Referring to FIGS. 3 and 4, a three-dimensional shape measurement apparatus 101 according to another exemplary embodiment of the present invention may include a plurality of main pattern illumination parts 1 10a, a plurality of main image-capturing parts 120a, a control part 130 (refer to FIG. 1), a plurality of main beam-splitting parts 150, etc. The three-dimensional shape measurement apparatus 101 is substantially the same as the three-dimensional shape measurement apparatus 100 shown in FIGS. 1 and 2 except for the placement configuration of the main pattern illumination parts 110a and the main image-capturing parts 120a, and including the main beam-splitting parts 150. Thus, detailed description thereof will be omitted.

As shown in FIG. 3, the main pattern illumination parts 110a and the main image-capturing parts 120a may be spaced apart from each other around the measurement target 10 in the circumferential direction or arranged at respective vertexes of a polygon around the measurement target 10. The main pattern illumination parts 110a and the main image-capturing parts 120a may be disposed in correspondence with each other. Accordingly, as shown in FIG. 3, the main pattern illumination part 110a and the main image-capturing part 120a that correspond to each other form a set.

The three-dimensional shape measurement apparatus 101 includes a main beam-splitting part 150. For example, the main beam-splitting part 150 may include a beam splitter.

The main beam-splitting part 150 is disposed corresponding to the main pattern illumination part 110a and the main image-capturing part 120a forming a set. The main beam-splitting part 150 transmits the grating pattern light PL generated from the main pattern illumination part 110a toward the measurement target 10, and separates reflection lights that are emitted from the main pattern illumination parts 110a and reflected by the measurement target 10, to thereby provide the reflection lights to the main image-capturing part 120a.

That is, as shown in FIG. 4, the main pattern illumination part 110a and the main image-capturing part 120a forming a set also form a set with the main beam-splitting part 150. The grating pattern light PL generated from the main pattern illumination part 110a is transmitted through the main beam-splitting part 150, and the grating pattern image PI is captured by the plurality of main image-capturing parts 120a. The grating pattern lights generated from the plurality of main pattern illumination parts 110 are reflected by the main beam-splitting part 150 and the grating pattern image PI is captured by the main image-capturing part 120a.

Since the three-dimensional shape measurement apparatus 101 is formed to correspond to the main pattern illumination part 110a, the main image-capturing part 120a and the main beam-splitting part 150, more compact arrangement of the apparatus and more effective three-dimensional shape measurement of the measurement target 10 may be available.

The control part 130 may perform control so that all of the main image-capturing parts 120a simultaneously image-capture the grating pattern light PL generated in any one main pattern illumination part 110a and then only the grating pattern image captured by the any one main pattern illumination part 110 are excluded in calculating a three-dimensional shape, otherwise so that only the main image-capturing part 120a forming the set does not capture.

FIG. 5 is a plan view of a three-dimensional shape measurement apparatus according to still another exemplary embodiment of the present invention.

Referring to FIG. 5, a three-dimensional shape measurement apparatus 102 according to still another exemplary of the present invention may include a plurality of main pattern illumination parts 110a, a plurality of main image-capturing parts 120a, a control part 130 (refer to FIG. 1), a top pattern illumination part 110b, etc. The three-dimensional shape measurement apparatus 102 is substantially the same as the three-dimensional shape measurement apparatus 100 shown in FIG. 1 and FIG. 2 except for including the top pattern illumination part 110b. Thus, detailed description thereof will be omitted.

The top pattern illumination part 110b is disposed over the measurement target 10 (refer to FIG. 1), and may vertically provide the grating pattern light PL (refer to FIG. 1) toward the measurement target 10. The grating pattern light PL according to the top pattern illumination part 110b may be simultaneously captured by the main image-capturing parts 120a after being reflected by the measurement target 10.

In addition, each main pattern illumination part 110a sequentially emits the grating pattern light PL toward the measurement target 10, and then the plurality of main image-capturing parts 120a may simultaneously capture images thereof. Thus, since the control part 130 may calculate a three-dimensional shape by combining the respective grating pattern images according to the top pattern illumination part 110b and the main pattern illumination part 110a, a more accurate three-dimensional shape may be obtained.

Meanwhile, the top pattern illumination part 110b may optionally employ optical path changing elements such as a mirror, so that substantial placement positions may be configured as the above, even though actual placement positions are somewhat different from the above.

Thus, since the three-dimensional shape measurement apparatus 102 has the top pattern illumination part 110b, the grating pattern light PL is provided perpendicular to the measurement target 10. Thus, a more accurate three-dimensional shape measurement for the measurement target 10 may be available.

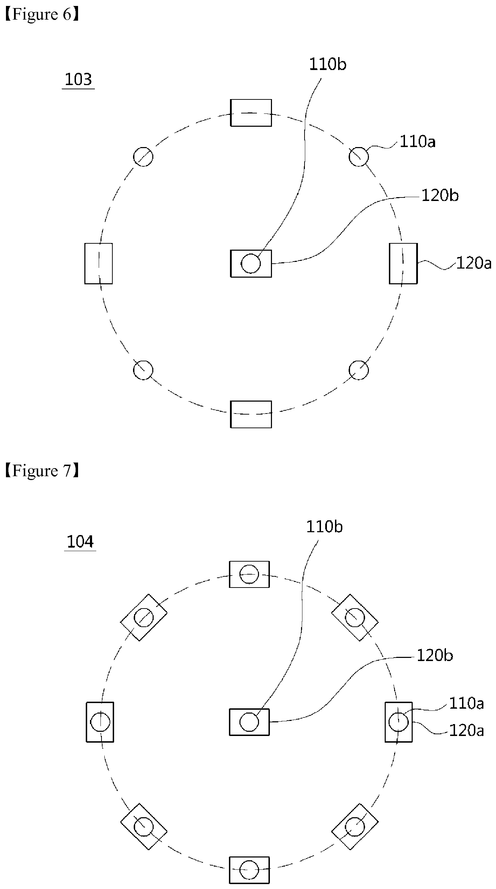

FIG. 6 is a plan view of a three-dimensional shape measurement apparatus according to still another exemplary embodiment of the present invention.

Referring to FIG. 6, a three-dimensional shape measurement apparatus 103 according to still another exemplary of the present invention may include a plurality of main pattern illumination parts 110a, a plurality of main image-capturing parts 120a, a control part 130 (refer to FIG. 1), a top pattern illumination part 110b, a top image-capturing part 120b, etc. The three-dimensional shape measurement apparatus 103 is substantially the same as the three-dimensional shape measurement apparatus 102 shown in FIG. 5 except for including the top image-capturing part 120b. Thus, detailed description thereof will be omitted.

The top pattern illumination part 120b is disposed over the measurement target 10 (refer to FIG. 1), and may capture the grating pattern image PI (refer to FIG. 1) that is formed by a process, in which the grating pattern light PL (refer to FIG. 1) is emitted from at least one of the main pattern illumination parts 110a and the top pattern illumination part 110b, and vertically reflected by the measurement target 10, to thereby form the grating pattern image PI.

In addition, when a two-dimensional illumination part (not shown) is disposed between the top image-capturing part 120b and the measurement target 10, the top image-capturing part 120b may capture a two-dimensional illumination image that is formed by a process, in which light emitted from the two-dimensional illumination part and vertically reflected by the measurement target 10, to thereby form the two-dimensional illumination image.

That is, the top image-capturing part 120b may image-capture the grating pattern light PL emitted from the top pattern illumination part 110b and then combine to generate a two-dimensional image in which a grating pattern is removed, and capture a two-dimensional image that is formed by a process in which light emitted from the two-dimensional illumination part and vertically reflected by the measurement target 10, to thereby form the two-dimensional image. Thus, two-dimensional inspection may be performed based on at least one two-dimensional image generated or captured, and the imaging distortion of the measurement target 10 captured by the image-capturing part 120a at one side may be easily corrected.

The three-dimensional shape measurement apparatus 103 may further include a top beam-splitting part (not shown).

The top beam-splitting part may have the same structure as the main beam-splitting part 150 shown in FIG. 4, and may perform a similar function to the main beam-splitting part 150. The top beam-splitting part transmits the grating pattern light PL generated from the top pattern illumination part 110b toward the measurement target 10, and reflects at least one of reflection lights, which are emitted from the plurality of main pattern illumination parts 110a and the top pattern illumination part 110b and reflected by the measurement target 10, to the top image-capturing part 120b.

Meanwhile, the top image-capturing part 120b may optionally employ optical path changing elements such as a mirror, so that substantial placement positions may be configured as the above, even though actual placement positions are somewhat different from the above.

In FIG. 6, although it is described that the top image-capturing part 120b and the top pattern illumination part 110b are provided together, only the top image-capturing part 120b may be provided without the top pattern illumination part 110b.

Thus, since the three-dimensional shape measurement apparatus 103 has the top image-capturing part 120b, the grating pattern light PL that is vertically reflected is obtained. Thus, a more accurate three-dimensional shape measurement for the measurement target 10 may be available.

FIG. 7 is a plan view of a three-dimensional shape measurement apparatus according to still another exemplary embodiment of the present invention.

Referring to FIG. 7, a three-dimensional shape measurement apparatus 104 according to still another exemplary of the present invention includes a plurality of main pattern illumination parts 110a, a plurality of main image-capturing parts 120a, a control part 130 (refer to FIG. 1), a top pattern illumination part 110b, a top image-capturing part 120b, and main beam-splitting parts 150 (refer to FIG. 4). The three-dimensional shape measurement apparatus 104 is substantially the same as the three-dimensional shape measurement apparatus 103 shown in FIG. 6 except that the main pattern illumination parts 110a, the main image-capturing parts 120a and the main beam-splitting parts 150 are disposed corresponding to each other as shown in FIG. 3 and FIG. 4. Thus, detailed description thereof will be omitted.

Particularly, the three-dimensional shape measurement apparatus 104 employs the arrangement of the top pattern illumination part 110b and the top image-capturing part 120b shown in FIG. 6, and employs the arrangement of the main pattern illumination parts 110a and the main image-capturing parts 120a shown in FIG. 3.

Thus, it may be possible to include as many pattern illumination parts and image-capturing parts as possible, so that a more precise three-dimensional shape measurement for the measurement target 10 (refer to FIG. 1) may be available.

According to the three-dimensional shape measurement apparatus, grating pattern lights are generated from multiple pattern illumination parts and grating pattern images are captured by multiple image-capturing parts. Thus, when merging multiple grating pattern images captured by the multiple image-capturing parts, more accurate and precise measurement for the three-dimensional shape of the measurement target may be available.

Further, when the main pattern illumination parts, the main image-capturing parts, and the main beam-splitting parts are formed to correspond to each other, more compact device arrangement and more effective three-dimensional shape measurement for the measurement target may be available.

In addition, when a top pattern illumination part is provided, since a grating pattern light is provided perpendicular to the measurement target, a more precise three-dimensional shape measurement for the measurement target may be available.

In addition, when a top image-capturing part is provided, more precise three-dimensional shape measurement for the measurement target may be available by receiving vertically reflected grating pattern lights and a two-dimensional illumination images.

Also, when the main pattern illumination parts, the main image-capturing parts and the main beam-splitting part form a set, and the top pattern illumination part, the top image-capturing part and the top beam-splitting part form a set, since the pattern illumination parts and the image-capturing parts are included as many as possible, more precise three-dimensional shape measurement for the measurement target may be available.

It will be apparent to those skilled in the art that various modifications and variation may be made in the present invention without departing from the spirit or scope of the invention. Thus, it is intended that the present invention cover the modifications and variations of this invention provided they come within the scope of the appended claims and their equivalents.

## Claims

1. A three-dimensional shape measurement apparatus comprising:
a plurality of main pattern illumination parts obliquely emitting grating pattern lights toward a measurement target in different directions;
a plurality of main image-capturing parts image-capturing grating pattern lights that are emitted from the main pattern illumination parts and obliquely reflected by the measurement target;
a top image-capturing part disposed over the measurement target to capture a grating pattern image, wherein the grating pattern light is emitted from the main pattern illumination parts and vertically reflected by the measurement target to form the grating pattern image; and
a control part producing a three-dimensional shape of the measurement target using grating pattern images captured from at least one of the main image-capturing parts and the top image-capturing part.

2. The three-dimensional shape measurement apparatus of claim 1,
wherein four main pattern illumination parts are spaced apart from each other around the measurement target in a circumferential direction,
wherein four main image-capturing parts are spaced apart from each other around the measurement target in a circumferential direction.

3. The three-dimensional shape measurement apparatus of claim 1, wherein the main pattern illumination parts and the main image-capturing parts are disposed alternately with each other.

4. The three-dimensional shape measurement apparatus of claim 1, wherein four main pattern illumination parts are spaced apart from each other around the measurement target in a circumferential direction,
wherein four main image-capturing parts are spaced apart from each other around the measurement target in a circumferential direction,
wherein the four main pattern illumination parts and the four main image-capturing parts are disposed corresponding to each other with forming a set, and
wherein the three-dimensional shape measurement apparatus further comprises four main beam-splitting parts, each of which forms a set with the main pattern illumination part and the main image-capturing part that are disposed corresponding to each other, transmits the grating pattern light generated from the main pattern illumination part toward the measurement target, and separates reflection lights, which are emitted from the main pattern illumination parts and reflected by the measurement target, to provide the reflection lights to the main image-capturing part.

5. The three-dimensional shape measurement apparatus of claim 1, further comprising an optical path changing element configured to change optical path of the grating pattern light generated from the main pattern illumination parts.

6. The three-dimensional shape measurement apparatus of claim 1, further comprising an optical path changing element configured to change optical path of the grating pattern light reflected by the measurement target to provide the grating pattern light to the main image-capturing parts.

7. The three-dimensional shape measurement apparatus of claim 1, wherein the control part selects images with a reliability greater than a reference value among the grating pattern images to obtain three-dimensional shape information.

8. The three-dimensional shape measurement apparatus of claim 1, further comprising an illumination part emitting at least one color light to acquire a two-dimensional image.
